# EUROPÄISCHE PATENTANMELDUNG

(11) **EP 4 692 845 A1**
(43) Veröffentlichungstag der Anmeldung: **11.02.2026**
(21) Anmeldenummer: 25191338.0
(22) Anmeldetag: 23.07.2025
(51) Int. Cl.: G01S 7/497, G01S 17/93

(54) **VERFAHREN ZUM ÜBERPRÜFEN EINES LASER-SYSTEMS**

(30) Priorität: 07.08.2024 DE 102024207470
(71) Anmelder: Robert Bosch GmbH, 70442 Stuttgart (DE)
(72) Erfinder: Copeto, David, 71638 Ludwigsburg (DE); Noe, Stefan, 70563 Stuttgart (DE); Hoffarth, Joern, 72764 Reutlingen (DE)

(57) **Zusammenfassung**

Die Erfindung betrifft ein Verfahren (100) zum Überprüfen eines Laser-Systems. Ferner betrifft die Erfindung ein Computerprogramm, eine Vorrichtung sowie ein Speichermedium zu diesem Zweck.

## Beschreibung

Die Erfindung betrifft ein Verfahren zum Überprüfen eines Laser-Systems. Ferner betrifft die Erfindung ein Computerprogramm, eine Vorrichtung sowie ein Speichermedium zu diesem Zweck.

### Stand der Technik

Die Überprüfung von Laser-Systemen ist von entscheidender Bedeutung, insbesondere im Hinblick auf die Augensicherheit der Benutzer. Laserstrahlung kann, abhängig von der Wellenlänge und Intensität, erhebliche gesundheitliche Risiken darstellen, insbesondere für die Augen, die besonders empfindlich gegenüber intensiven Lichtquellen sind. Ein unzureichend überprüftes Laser-System kann zu unerwünschter Exposition und damit zu ernsthaften Augenschäden führen, einschließlich temporärer oder permanenter Sehstörungen. Im Bauteilausfall kann eine Ausgangsleistung des Laser-Systems um ein Vielfaches ansteigen. Je größer die Laserleistung, desto schneller muss abgeschaltet werden, um die Augensicherheit weiter zu gewährleisten. Es ist daher unerlässlich, dass Laser-Systeme strengen Prüf- und Sicherheitsprotokollen unterzogen werden, um sicherzustellen, dass sie den geltenden Sicherheitsstandards entsprechen und ein sicheres Arbeitsumfeld für Benutzer gewährleisten.

### Offenbarung der Erfindung

Gegenstand der Erfindung ist ein Verfahren mit den Merkmalen des Anspruchs 1, ein Computerprogramm mit den Merkmalen des Anspruchs 7, eine Vorrichtung mit den Merkmalen des Anspruchs 8 sowie ein computerlesbares Speichermedium mit den Merkmalen des Anspruchs 9. Weitere Merkmale und Details der Erfindung ergeben sich aus den jeweiligen Unteransprüchen, der Beschreibung und den Zeichnungen. Dabei gelten Merkmale und Details, die im Zusammenhang mit dem erfindungsgemäßen Verfahren beschrieben sind, selbstverständlich auch im Zusammenhang mit dem erfindungsgemäßen Computerprogramm, der erfindungsgemäßen Vorrichtung sowie dem erfindungsgemäßen computerlesbaren Speichermedium, und jeweils umgekehrt, so dass bezüglich der Offenbarung der Erfindung stets auch eine wechselseitige Bezugnahme möglich ist.

Gegenstand der Erfindung ist insbesondere ein Verfahren zum Überprüfen eines Laser-Systems, umfassend die nachfolgenden Schritte, wobei die Schritte wiederholt und/oder in einer bestimmten Reihenfolge durchgeführt werden können. Das Laser-System kann ein Laser-Entfernungsmessgerät sein.

Das Laser-System kann eine Vielzahl von Anwendungen betreffen, die präzise Messungen oder Kontrolle von Laserstrahlen erfordern. Ein Beispiel dafür ist ein Laser-Entfernungsmessgerät, das zur Abstandsmessung verwendet werden kann. Dieses Gerät benötigt genaue Regelungsmechanismen, um zuverlässige Distanzen zu erfassen. Das Verfahren gemäß der Erfindung kann es ermöglichen, den Betrieb dieses Entfernungsmessgeräts sicherer und stabiler zu machen. Die definierbaren Sicherheitskriterien des Verfahrens gemäß der Erfindung können speziell auf die Anforderungen eines Laser-Entfernungsmessgeräts abgestimmt werden, um optimale Messgenauigkeit und Sicherheit zu gewährleisten.

In einem ersten Schritt wird vorzugsweise wenigstens ein Sicherheitskriterium definiert, wobei das wenigstens eine Sicherheitskriterium einen zulässigen Bereich für eine Regelung eines Lasers des Laser-Systems vorgibt.

In einem weiteren Schritt wird vorzugsweise das Laser-System auf Basis des definierten wenigstens einen Sicherheitskriteriums automatisiert überprüft. Das Überprüfen kann beispielsweise ein Vergleichen eines aktuellen Wertes im Rahmen der Regelung mit einem Wert gemäß des wenigstens einen Sicherheitskriteriums umfassen. So kann vorteilhaft ein Fehler in dem Laser-System auf Basis des wenigstens einen Sicherheitskriteriums frühzeitig erkannt werden.

In einem weiteren Schritt wird vorzugsweise wenigstens eine Maßnahme in Abhängigkeit von einem Ergebnis des Überprüfens initiiert. Die wenigstens eine Maßnahme kann beispielsweise Anpassungen der Laserregelung, eine Warnmeldung oder ein vollständiges Herabsetzen einer Ausgangsleistung des Laser-Systems umfassen, abhängig vom Ergebnis des Überprüfens. Es ist auch denkbar, dass die wenigstens eine Maßnahme keine Handlung umfasst, sodass ein Betrieb unverändert fortgesetzt wird, wenn ein Ergebnis des Überprüfens indiziert, dass das Laser-System das wenigstens eine Sicherheitskriterium erfüllt. Mit der wenigstens einen Maßnahme kann vorteilhaft auf einen sicherheitskritischen Zustand des Laser-Systems entsprechend reagiert werden.

Außerdem ist es von Vorteil, wenn das wenigstens eine Sicherheitskriterium ausgewählt ist aus:
- einem Minimal- und/oder Maximalwert und/oder eine Änderungsrate einer Regelgröße der Regelung,
- einem Minimal- und/oder Maximalwert und/oder eine Änderungsrate einer Stellgröße der Regelung,
- einer maximalen Einschwingzeit des Lasers bei einem Einschaltvorgang.

Damit kann der Vorteil erzielt werden, dass die Sicherheit des Laserreglers durch eine präzise Analyse der Regelgröße und Stellgröße sowie der Änderungsraten und Einschwingzeiten überprüft werden kann. Dadurch kann eine feinere Anpassung an spezifische Anforderungen und Anwendungsfälle ermöglicht werden. Die Option der Auswahl aus verschiedenen Sicherheitskriterien bietet insbesondere eine Flexibilität bei einer Konfiguration des Laser-Systems für unterschiedliche Anwendungen. Ein weiteres Sicherheitskriterium können Registerüberläufe in einem Filter und/oder einem Integrator des Laser-Systems sein.

Bevorzugt kann im Rahmen der Erfindung vorgesehen sein, dass das Verfahren ferner die folgenden Schritte umfasst:
- Definieren einer Prüfsumme für eine Führungsgröße, Regelgröße und/oder Stellgröße der Regelung,
- Vergleichen eines aktuellen Wertes der Führungsgröße, Regelgröße und/oder Stellgröße mit der definierten Prüfsumme.

Die Führungsgröße der Regelung ist insbesondere ein vordefinierter Wert, auf den die Regelung abzielt. Diese Führungsgröße kann so gewählt werden, dass sie ein gewünschtes Verhalten oder eine gewünschte Leistung des Laser-Systems ermöglicht. Durch die Berechnung der Prüfsumme für relevante Regelungswerte, wie Führungsgröße, Regelgröße und Stellgröße, kann eine zusätzliche Fehlererkennung implementiert werden. Ein Vergleich des aktuellen Wertes mit der definierten Prüfsumme ermöglicht insbesondere eine Identifizierung von Korruption oder Manipulationen in übertragenen Daten. Dies kann vorteilhaft zur Stabilität und Sicherheit des Laser-Systems beitragen, indem unerwünschte Veränderungen frühzeitig erkannt und entsprechende Maßnahmen eingeleitet werden können.

Beispielsweise kann es vorgesehen sein, dass das wenigstens eine Sicherheitskriterium erst ab einem eingeschwungenen Zustand des Lasers berücksichtigt wird. Somit kann sichergestellt werden, dass die Überprüfung des Laser-Systems erst in einer stabilen Betriebsphase erfolgt. So können vorteilhaft unnötige Eingriffe während der Einschwingzeit des Lasers vermieden werden.

Es kann weiter möglich sein, dass die wenigstens eine Maßnahme den folgenden Schritt umfasst:
- Initiieren einer Überführung des Laser-Systems in einen Sicherheitszustand, wobei in dem Sicherheitszustand eine Emission von Licht durch den Laser auf ein für ein menschliches Auge ungefährliches Maß reduziert oder abgeschaltet wird.

Dies gewährleistet insbesondere einen Schutz vor potentiellen Schäden durch un- oder fehlgesteuerte Laseremissionen und kann eine Sicherheit des Laser-Systems im Falle von Fehlfunktionen erhöhen.

Gemäß einem weiteren Vorteil kann vorgesehen sein, dass die wenigstens eine Maßnahme den folgenden Schritt umfasst:
- Speichern des Ergebnisses des Überprüfens.

Dabei wird insbesondere das auslösende Sicherheitskriterium gespeichert und vorzugsweise werden ferner alle zu dem Zeitpunkt des Auslösens des im Laser System verwendeten Werte wie beispielsweise der Führungsgröße, Regelgröße, Stellgröße, gefilterte Zwischenergebnisse, Integratorzustände, Differientiatorzustände und/oder Betriebsmodi festgehalten. Auf diese Weise kann das Ergebnis der Überprüfung jederzeit im Laser-System abrufbar sein. Das ermöglicht insbesondere eine Nachverfolgung und kann eine Fehleranalyse im Falle eines Sicherheitsproblems erleichtern. Die Speicherung des Ergebnisses kann in einem Register des Laser-Systems stattfinden, d.h. die entsprechenden Werte können in ein oder mehrere Register gespeichert werden. Dies kann einen Zugriff auf externe Speichermedien reduzieren, was die Reaktionszeit bei Sicherheitsmaßnahmen verkürzen kann.

Ebenfalls Gegenstand der Erfindung ist ein Computerprogramm, insbesondere Computerprogrammprodukt, umfassend Befehle, die bei der Ausführung des Computerprogrammes durch einen Computer diesen veranlassen, das erfindungsgemäße Verfahren auszuführen. Damit bringt das erfindungsgemäße Computerprogramm die gleichen Vorteile mit sich, wie sie ausführlich mit Bezug auf ein erfindungsgemäßes Verfahren beschrieben worden sind.

Ebenfalls Gegenstand der Erfindung ist eine Vorrichtung zur Datenverarbeitung, die eingerichtet ist, das erfindungsgemäße Verfahren auszuführen. Als die Vorrichtung kann bspw. ein Computer vorgesehen sein, welcher das erfindungsgemäße Computerprogramm ausführt. Der Computer kann wenigstens einen Prozessor zur Ausführung des Computerprogramms aufweisen. Auch kann ein nicht-flüchtiger Datenspeicher vorgesehen sein, in welchem das Computerprogramm hinterlegt und von welchem das Computerprogramm durch den Prozessor zur Ausführung ausgelesen werden kann. Die Vorrichtung kann auch eine analoge diskrete elektronische Schaltung oder eine integrierte elektronische Schaltung sein, die entsprechend eingerichtet ist, das erfindungsgemäße Verfahren auszuführen.

Ebenfalls Gegenstand der Erfindung kann ein computerlesbares Speichermedium sein, welches das erfindungsgemäße Computerprogramm aufweist und/oder Befehle umfasst, die bei der Ausführung durch einen Computer diesen veranlassen, das erfindungsgemäße Verfahren auszuführen. Das Speichermedium ist bspw. als ein Datenspeicher wie eine Festplatte und/oder ein nicht-flüchtiger Speicher und/oder eine Speicherkarte ausgebildet. Das Speichermedium kann z. B. in den Computer integriert sein.

Darüber hinaus kann das erfindungsgemäße Verfahren auch als ein computerimplementiertes Verfahren ausgeführt sein. Alternativ oder zusätzlich kann zumindest einer der offenbarten Verfahrensschritte computer-implementiert sein und/oder automatisiert durchgeführt werden.

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung im Einzelnen beschrieben sind. Dabei können die in den Ansprüchen und in der Beschreibung erwähnten Merkmale jeweils einzeln für sich oder in beliebiger Kombination erfindungswesentlich sein. Es zeigen:
- Fig. 1: eine schematische Visualisierung eines Verfahrens, einer Vorrichtung, eines Speichermediums sowie eines Computerprogramms gemäß Ausführungsbeispielen der Erfindung,
- Fig. 2: eine schematische Darstellung eines Laser-Systems gemäß Ausführungsbeispielen der Erfindung.

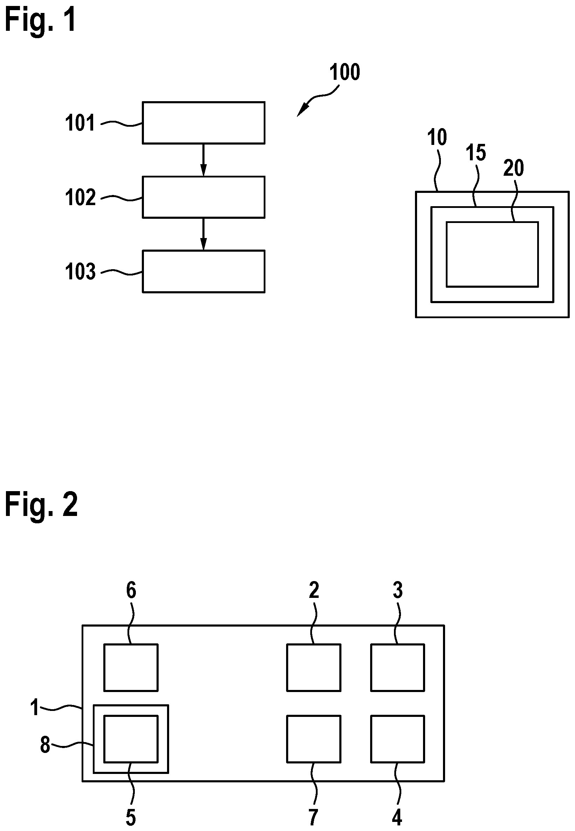

In Fig. 1 sind ein Verfahren 100, eine Vorrichtung 10, ein Speichermedium 15 sowie ein Computerprogramm 20 gemäß Ausführungsbeispielen der Erfindung schematisch dargestellt.

Fig. 1 zeigt insbesondere ein Ausführungsbeispiel für ein Verfahren 100 zum Überprüfen eines Laser-Systems 1. In einem ersten Schritt 101 wird wenigstens ein Sicherheitskriterium definiert, wobei das wenigstens eine Sicherheitskriterium einen zulässigen Bereich für eine Regelung eines Lasers 3 des Laser-Systems 1 vorgibt. In einem zweiten Schritt 102 wird das Laser-System 1 auf Basis des definierten wenigstens einen Sicherheitskriteriums automatisiert überprüft. In einem dritten Schritt 103 wird wenigstens eine Maßnahme in Abhängigkeit von einem Ergebnis des Überprüfens initiiert. Das wenigstens eine Sicherheitskriterium ist ausgewählt aus:
- einem Minimal- und/oder Maximalwert und/oder eine Änderungsrate einer Regelgröße der Regelung,
- einem Minimal- und/oder Maximalwert und/oder eine Änderungsrate einer Stellgröße der Regelung,
- einer maximalen Einschwingzeit des Lasers 3 bei einem Einschaltvorgang.

Ein weiteres Sicherheitskriterium können Registerüberläufe in einem Filter und/oder einem Integrator des Laser-Systems sein.

Das Verfahren der vorliegenden Erfindung betrifft ein Laser-System 1 und gemäß Ausführungsbeispielen insbesondere ein Laser-Entfernungsmessgerät, das die indirekte Time of Flight (iToF)-Messung verwendet. Für dieses Ausführungsbeispiel sei auf Fig. 2 verwiesen. Dieses Laser-Entfernungsmessgerät 1 arbeitet beispielsweise mit einer Messung einer Phasenverschiebung eines modulierten Lichtsignals, das vom Laser-Entfernungsmessgerät ausgesendet und von einem Zielobjekt reflektiert wird. Im Folgenden wird die Funktionsweise der indirekten Time of Flight (iToF)-Messung beschrieben. Zunächst kann ein Laser 3, insbesondere eine Laserdiode des Lasers 3, im Laser-Entfernungsmessgerät 1 intensitätsmoduliertes Licht, beispielsweise im infraroten oder sichtbaren Bereich, in Richtung eines Zielobjekts senden. Die Modulation erfolgt insbesondere mit einer sinusförmigen oder Rechteckwelle. Das intensitätsmodulierte Licht trifft anschließend auf das Zielobjekt und wird zurück zum Laser-Entfernungsmessgerät 1 reflektiert. Ein Detektor 4 im Messgerät kann nun das reflektierte Licht empfangen. Da das Licht eine gewisse Zeit benötigt, um die Strecke hin und zurück zu legen, kommt es zu einer Phasenverschiebung zwischen dem ausgesendeten und dem empfangenen Signal. Diese Phasenverschiebung zwischen dem ausgesendeten und dem empfangenen Signal kann anschließend gemessen werden. Diese Phasenverschiebung ist insbesondere proportional zur zurückgelegten Entfernung des Lichts. Die Entfernung kann anschließend aus der Phasenverschiebung unter Berücksichtigung der Wellenlänge der Modulation und der Lichtgeschwindigkeit berechnet werden. Hierbei kann ferner vorgesehen sein, dass eine Referenzphase mit einem zweiten Detektor mit einem konstanten Abstand bestimmt wird (nicht dargestellt), um die Phasenverschiebung auf Basis eines Vergleiches mit der Referenzphase zu bestimmen.

Das Laser-Entfernungsmessgerät 1 kann einen Messregler 2 aufweisen. Der Messregler 2 übernimmt insbesondere die Laserregelung, d.h. beispielsweise eine Steuerung des Lasers 3, eine Modulation, eine Signalverarbeitung, eine Phasenmessung und/oder Datenübertragung.

So kann der Messregler 2 eine Emission des Lasers 3 steuern, indem er ein Ein- und Ausschalten sowie eine Intensität und die Modulation eines Laserstrahls des Lasers 3 regelt. Dadurch kann sichergestellt werden, dass der Laserstrahl mit der richtigen Leistung und den richtigen Eigenschaften ausgesendet wird.

Nach dem Empfang eines Bruchteils des ausgesendeten Laserlichts durch den Detektor 4 kann der Messregler 2 das empfangene Signal verarbeiten. Dies umfasst beispielsweise eine Verstärkung, Filterung und Umwandlung des empfangenen analogen Signals in ein digitales Signal zur weiteren Analyse, insbesondere durch einen Analog-Digital-Wandler 5. Ferner kann die Phasenverschiebung zwischen dem ausgesendeten und dem empfangenen Signal messen und gegebenenfalls mit der Referenzphase verglichen werden.

Der Messregler 2 kann ferner regelmäßig Kalibrierungen durchführen, um sicherzustellen, dass die Messungen präzise sind. Dafür kann er einen Zustand des Lasers 3 und des Detektors 4 überwachen, um sicherzustellen, dass diese ordnungsgemäß funktionieren.

Zudem kann das Laser-System 1, insbesondere das Laser-Entfernungsmessgerät, einen Analog-Digital-Wandler 5 aufweisen. Der Analog-Digital-Wandler 5 wandelt vorzugsweise analoge Signale, die vom Detektor 4 empfangen werden, in digitale Signale um. Diese Signale repräsentieren insbesondere eine Lichtintensität, die vom Laser 3 ausgesendet wird. Die digitale Umwandlung kann es ermöglichen, die Phasenverschiebung zwischen dem ausgesendeten und dem empfangenen Signal zu analysieren. Die digitalen Signale, die von dem jeweiligen Analog-Digital-Wandler 5 bereitgestellt werden, können weiter gefiltert, verstärkt und verarbeitet werden, um Rauschen zu reduzieren und die Signalqualität zu verbessern.

Zudem kann das Laser-System 1 eine anwendungsspezifische integrierte Schaltung 8 aufweisen, in der beispielsweise der Analog-Digital-Wandler 5 angeordnet sein kann. Auch kann das Laser-System 1 einen Microcontroller 7 aufweisen, um unter Verwendung des Microcontrollers 7 die definierten Sicherheitskriterien zu prüfen. Ferner kann das Laser-System 1 wenigstens ein Register 6 aufweisen, um darin Daten zu speichern, wie beispielsweise welches der definierten Sicherheitskriterien im Fehlerfall nicht erfüllt wurde.

Ein Vorteil der Erfindung gemäß Ausführungsbeispielen ist insbesondere, dass auch bei Absturz des Microcontrollers 7, oder auch eines Computers oder Steuergerätes, eine Basis-Sicherheit gewährleistet werden kann. Zusätzlich muss beispielsweise in einem redundanten Laser-System 1 der Microcontroller 7 seltener die anwendungsspezifische integrierte Schaltung 8 überprüfen. Das kann eine benötigte Rechenlast reduzieren.

Gemäß Ausführungsbeispielen der Erfindung sind insbesondere Minimal- und/oder Maximalwerte sowie Änderungsraten für eine Regelgröße der Laserregelung definierbar. Ferner können Minimal- und/oder Maximalwerte sowie Änderungsraten für eine Stellgröße der Laserregelung definiert werden. Auch kann eine maximale Einschwingzeit bei einem Einschaltvorgang des Lasers 3 definiert werden. Werte wie ein Führungsgröße, Stellgröße und/oder Regelgröße können gegen eine Prüfsumme verglichen werden. Es kann ferner ein Sicherheitszustand definiert werden, in den das Laser-System 1 geht, wenn ein Fehler auftritt, d.h. wenn das wenigstens eine definierte Sicherheitskriterium nicht erfüllt ist. Die voranstehenden definierten Werte können individuell und temporär, bis der Laser 3 eingeschwungen ist, ignoriert werden.

Die voranstehende Erläuterung der Ausführungsformen beschreibt die vorliegende Erfindung ausschließlich im Rahmen von Beispielen. Selbstverständlich können einzelne Merkmale der Ausführungsformen, sofern technisch sinnvoll, frei miteinander kombiniert werden, ohne den Rahmen der vorliegenden Erfindung zu verlassen.

## Patentansprüche

1. Verfahren (100) zum Überprüfen eines Laser-Systems (1), umfassend die nachfolgenden Schritte:
- Definieren (101) wenigstens eines Sicherheitskriteriums, wobei das wenigstens eine Sicherheitskriterium einen zulässigen Bereich für eine Regelung eines Lasers (3) des Laser-Systems (1) vorgibt,
- Automatisiertes Überprüfen (102) des Laser-Systems (1) auf Basis des definierten wenigstens einen Sicherheitskriteriums,
- Initiieren (103) wenigstens einer Maßnahme in Abhängigkeit von einem Ergebnis des Überprüfens (102).
wobei das wenigstens eine Sicherheitskriterium ausgewählt ist aus:
- einem Minimal- und/oder Maximalwert und/oder eine Änderungsrate einer Regelgröße der Regelung,
- einem Minimal- und/oder Maximalwert und/oder eine Änderungsrate einer Stellgröße der Regelung,
- einer maximalen Einschwingzeit des Lasers (3) bei einem Einschaltvorgang.

2. Verfahren (100) nach Anspruch 1,
**dadurch gekennzeichnet,**
**dass** das Verfahren (100) ferner die folgenden Schritte umfasst:
- Definieren einer Prüfsumme für eine Führungsgröße, Regelgröße und/oder Stellgröße der Regelung,
- Vergleichen eines aktuellen Wertes der Führungsgröße, Regelgröße und/oder Stellgröße mit der definierten Prüfsumme.

3. Verfahren (100) nach einem der vorhergehenden Ansprüche,
**dadurch gekennzeichnet,**
**dass** das wenigstens eine Sicherheitskriterium erst ab einem eingeschwungenen Zustand des Lasers (3) berücksichtigt wird.

4. Verfahren (100) nach einem der vorhergehenden Ansprüche,
**dadurch gekennzeichnet,**
**dass** die wenigstens eine Maßnahme den folgenden Schritt umfasst:
- Initiieren einer Überführung des Laser-Systems (1) in einen Sicherheitszustand, wobei in dem Sicherheitszustand eine Emission von Licht durch den Laser (3) auf ein für ein menschliches Auge ungefährliches Maß reduziert oder abgeschaltet wird.

5. Verfahren (100) nach einem der vorhergehenden Ansprüche,
**dadurch gekennzeichnet,**
**dass** die wenigstens eine Maßnahme den folgenden Schritt umfasst:
- Speichern des Ergebnisses des Überprüfens (102) in einem Register (6) des Laser-Systems (1).

6. Verfahren (100) nach einem der vorhergehenden Ansprüche,
**dadurch gekennzeichnet,**
**dass** das Laser-System (1) ein Laser-Entfernungsmessgerät ist.

7. Computerprogramm (20), umfassend Befehle, die bei der Ausführung des Computerprogramms (20) durch einen Computer (10) diesen veranlassen, das Verfahren (100) nach einem der vorhergehenden Ansprüche auszuführen.

8. Vorrichtung (10) zur Datenverarbeitung, die eingerichtet ist, das Verfahren (100) nach einem der Ansprüche 1 bis 6 auszuführen.

9. Computerlesbares Speichermedium (15), umfassend Befehle, die bei der Ausführung durch einen Computer (10) diesen veranlassen, die Schritte des Verfahrens (100) nach einem der Ansprüche 1 bis 6 auszuführen.
